# EUROPÄISCHE PATENTANMELDUNG

(11) **EP 1 956 855 A1**
(43) Veröffentlichungstag der Anmeldung: **13.08.2008**
(21) Anmeldenummer: 08002404.5
(22) Anmeldetag: 08.02.2008
(51) Int. Cl.: H04Q 7/32

(54) **Verfahren zum Sichern von Daten eines mobilen Endgeräts**

(30) Priorität: 09.02.2007 DE 102007006570
(71) Anmelder: Giesecke & Devrient GmbH, 81677 München (DE)
(72) Erfinder: Albert, Daniel, 81827 München (DE); Döllinger, Martin, 81371 München (DE)

(57) **Zusammenfassung**

Die Erfindung schafft ein Verfahren zum Sichern von Daten eines mobilen Endgeräts 1, das mit einer Teilnehmerkarte 2 in einem Mobilfunksystem betreibbar ist, wobei die Daten in der Teilnehmerkarte 2 gesichert werden, ein mobiles Endgerät 1 mit einer entsprechenden Sicherungs-Applikation 3. Vor dem Sichern von Daten, nachdem die Daten im mobilen Endgerät 1 geändert worden sind, wird eine Wartezeit eingehalten, innerhalb der kein Sichern von Daten durchgeführt wird.

## Beschreibung

Die Erfindung betrifft ein Verfahren zum Sichern von Daten eines mit einer Teilnehmerkarte in einem Mobilfunksystem betreibbaren mobilen Endgeräts.

Unter einem mobilen Endgerät wird ein Gerät zum Nutzen eines Mobilfunksystems in Verbindung mit einer Teilnehmerkarte verstanden, z.B. ein Mobiltelefon, Smart Phone oder PDA (Personal Digital Assistant) oder PocketPC mit Mobiltelefonfunktion. Herzstück der Teilnehmerkarte ist das Sicherheitsmodul, das Identitätsdaten enthält, wie beispielsweise die IMSI und den Authentisierungsschlüssel Ki, die für die Teilnehmerkarte und damit indirekt für den Nutzer der Teilnehmerkarte bzw. des damit betriebenen mobilen Endgeräts spezifisch sind. Im Zusammenhang mit der Erfindung wird die Einheit von mobilem Endgerät und Teilnehmerkarte als Mobilsystem bezeichnet.

Mit einem Mobilfunksystem wird ein Gesamtsystem mit einem Mobilfunknetzwerk, einem Hintergrundsystem und einer Mehrzahl von Mobilsystemen (aus Endgerät und Teilnehmerkarte) bezeichnet. Beispiele für Mobilfunksysteme sind GSM (Global System for Mobile Communications), UMTS (Universal Mobile Telecommunications System), IMT-2000 (International Mobile Communication 2000). Im GSM-Mobilfunksystem ist das Sicherheitsmodul als SIM (SIM = Subscriber Identity Module) bezeichnet, im UMTS-Mobilfunksystem als USIM (USIM = Universal SIM). Die Teilnehmerkarte wird in diesen Fällen als SIM-Karte bzw. USIM-Karte bezeichnet.

Mobile Endgeräte werden von ihren Nutzern zunehmend zum Speichern von Kontaktdaten wie z.B. Telefonnummern, Adressen und dergleichen von potentiellen Gesprächspartnern, Notizen über Gesprächspartner und weiteren Kontaktdaten benutzt. Ein Verlust dieser Kontaktdaten wäre für den Nutzer in aller Regel sehr unangenehm. Daher wird der Nutzer versuchen, nach Möglichkeit die Kontaktdaten zu sichern, indem er eine Sicherungskopie der Kontaktdaten anlegt. Neben Kontaktdaten sind in einem mobilen Endgerät eine Reihe von weiteren Daten abgespeichert. Zu den weiteren Daten zählen beispielsweise Konfigurationsdaten, durch welche eine Konfiguration des mobilen Endgeräts festgesetzt ist, also beispielsweise Netzwerkeinstellungen für unterschiedliche Mobilfunknetze, Spracheinstellungen, Menüeinstellungen, Bildschirmeinstellungen und dergleichen.

In WO 02/073992 A1 wird vorgeschlagen, Telefonbucheinträge eines mobilen Endgeräts bei einem zentralen Server zu sichern, d.h. ein Backup der Telefonbucheinträger bei dem zentralen Server anzulegen. Wird ein Telefonbucheintrag an dem Endgerät geändert, wird auch das Telefonbuch auf dem zentralen Server entsprechend geändert.

In KR 20010017720 wird vorgeschlagen, Telefonbucheinträge eines Mobilfunk-Endgeräts in eine externe Flash-Speicherkarte zu sichern, die über eine Schnittstelle (z.B. RS232C) des Mobilfunk-Endgeräts an das Mobilfunk-Endgerät angeschlossen wird. Auch in US 2004/0116155 A1 wird vorgeschlagen, eine zusätzliche Karte, die jedoch auch die Form einer SIM-Karte hat, zum Speichern von Telefonbucheinträgen zu verwenden. Die Telefonbucheinträge werden kopiert, nachdem die zusätzliche Karte eingesetzt, eine PIN eingegeben und ein entsprechender Menüpunkt von dem Benutzer auf seinem Endgerät ausgewählt wurde.

Sowohl beim Sichern auf einen zentralen Server als auch beim Sichern auf eine externe Speicherkarte muss zum Sichern der Telefonbucheinträge eines mobilen Endgeräts eine aufwändige Infrastruktur außerhalb des mobilen Endgeräts eingerichtet und unterhalten werden.

Der Erfindung liegt die Aufgabe zu Grunde, ein komfortables Verfahren zum Sichern von Daten eines mobilen Endgeräts zu schaffen.

Die Aufgabe wird gelöst durch ein Verfahren nach dem unabhängigen Verfahrensanspruch. Vorteilhafte Ausgestaltungen der Erfindung sind in den abhängigen Ansprüchen angegeben.

Das erfindungsgemäße Verfahren gemäß dem unabhängigen Anspruch 1 ist vorgesehen zum Sichern von Daten (d.h. zum Erzeugen eines Backup oder einer Sicherungskopie der Daten) eines mobilen Endgeräts, das mit einer Teilnehmerkarte, z.B. (U)SIM-Karte etc., in einem Mobilfunksystem, z.B. GSM, UMTS etc., betreibbar ist. Gemäß der Erfindung werden die Daten in die bzw. in der Teilnehmerkarte gesichert. Dadurch, dass die Daten in die Teilnehmerkarte gesichert werden, muss zum Sichern der Daten keine zusätzliche Infrastruktur außerhalb des Systems aus Endgerät und Teilnehmerkarte vorgesehen werden.

Daher ist gemäß Anspruch 1 ein besonders komfortables Verfahren zum Sichern von Daten eines mobilen Endgeräts geschaffen.

Das Verfahren ist besonders bevorzugt für Teilnehmerkarten, die über viel Speicherplatz verfügen.

Die Daten umfassen wahlweise Kontaktdaten eines Telefonbuchs des mobilen Endgeräts, z.B. Telefonbucheinträge mit z.B. Telefonnummern, Adressen, Notizen und dergleichen. Wahlweise umfassen die Daten Konfigurationsdaten des mobilen Endgeräts, beispielsweise Netzwerkeinstellungen für unterschiedliche Mobilfunknetze, Spracheinstellungen, Menüeinstellungen, Bildschirmeinstellungen und dergleichen.

Bei einer Ausführungsform der Erfindung wird, nachdem Daten im mobilen Endgerät geändert worden sind, ein Sichern von Daten in die Teilnehmerkarte durchgeführt. Diese Ausführungsform der Erfindung stellt sicher, dass bei Aktualisierungen der Daten im mobilen Endgerät auch die Sicherungskopie der Daten in der Teilnehmerkarte aktualisiert wird. Das Ändern der Daten kann insbesondere ein Hinzufügen oder Löschen von Daten umfassen, oder/und ein Ersetzen von vorhandenen Daten durch andere Daten. Bedarfsweise werden nach einer Änderung von Daten alle Daten gesichert bzw. erneut gesichert oder nur geänderte Daten gesichert.

Das Sichern von Daten in die Teilnehmerkarte, nach dem Ändern von Daten im mobilen Endgerät, belastet die Ressourcen (z.B. Mikroprozessor, Speicher) des mobilen Endgeräts besonders stark. Dabei kann es vorkommen, dass die Ressourcen des Endgeräts so stark beansprucht werden, dass das Endgerät nicht mehr auf Eingaben des Nutzers auf Eingabeeinrichtungen des Endgeräts - wie z.B. Tastatur oder Mikrofon - reagiert.

Bei einer Variante der Erfindung wird vor dem Sichern von Daten, nachdem Daten im mobilen Endgerät geändert worden sind, eine geeignete Wartezeit eingehalten, innerhalb der kein Sichern von Daten durchgeführt wird. Diese Variante hat den besonderen Vorteil, dass das Endgerät zunächst die Änderung der Daten im mobilen Endgerät abarbeiten kann, bevor es damit belastet wird, die Sicherung von Daten in die Teilnehmerkarte durchführen zu müssen. Daher wird eine Überlastung des Endgeräts möglichst vermieden. Eingaben des Nutzers auf der Tastatur oder anderen Eingabeeinrichtungen des Endgeräts werden mit höherer Zuverlässigkeit vorschriftsmäßig durch das Endgerät verarbeitet. Das Verfahren gemäß der Variante, bei dem, nachdem Daten im mobilen Endgerät geändert worden sind, und bevor Daten in die Teilnehmerkarte gesichert werden, eine Wartezeit eingehalten wird, ist daher besonders komfortabel.

Bei einer weiteren Variante der Erfindung weisen die Daten eine Mehrzahl von Datensätzen auf. Bei dieser Variante wird zu jedem Datensatz, der im mobilen Endgerät geändert wird, im mobilen Endgerät eine Referenz angelegt, aus der erkennbar ist, dass der Datensatz oder Teil-Datensatz davon in die Teilnehmerkarte gesichert werden muss. Die Referenz wird wieder aus dem mobilen Endgerät gelöscht, sobald der (Teil-)Datensatz in die Teilnehmerkarte gesichert ist. Diese Variante der Referenzen hat den Vorteil, dass Daten, die noch in die Teilnehmerkarte gesichert werden müssen, mit geringem Aufwand an Ressourcen kenntlich gemacht sind und bedarfsweise zu einem späteren Zeitpunkt in die Teilnehmerkarte gesichert werden können.

Wahlweise werden, bei der Variante der Referenzen, alle oder ein Teil der angelegten Referenzen oder der den angelegten Referenzen zugeordneten Vorgänge des Sicherns von Datensätzen gemäß vorbestimmten oder vorbestimmbaren Kriterien sortiert und/oder zusammengefasst. Auf diese Weise können beispielsweise Referenzen, die ein und denselben Datensatz betreffen, direkt aufeinanderfolgend angeordnet und zusammengefasst werden. Der den Referenzen entsprechende Datensatz wird dann in einem einzigen Vorgang gesichert, wobei alle durchgeführten Änderungen auf einmal berücksichtigt werden. Durch ein geeignetes derartiges Sortieren und/ oder Zusammenfassen lassen sich zusätzlich Ressourcen des Endgeräts sparen.

Die Variante der Referenzen ist wahlweise mit der Variante der Wartezeit kombiniert, wobei wahlweise die Wartezeit umso länger ist, je mehr Referenzen im mobilen Endgerät abgespeichert (angelegt) sind. Je mehr Referenzen im Endgerät abgespeichert sind, umso mehr geänderte Datensätze liegen im Endgerät vor. Entsprechend ist die Zeit, die das Endgerät benötigt, um die Änderungen zu verarbeiten, umso länger. Daher ist es vorteilhaft, wenn die Wartezeit entsprechend ebenfalls verlängert ist.

Das Sichern von Daten aus dem mobilen Endgerät in die Teilnehmerkarte beansprucht die Ressourcen des mobilen Endgeräts im Allgemeinen. Dabei kann es vorkommen, dass die Ressourcen des Endgeräts so stark beansprucht werden, dass das Endgerät nicht mehr auf Eingaben des Nutzers auf Eingabeeinrichtungen des Endgeräts - wie z.B. Tastatur oder Mikrofon - reagiert, solange das Endgerät Daten in die Teilnehmerkarte sichert. Dies bedeutet eine erhebliche Beeinträchtigung des Bedienkomforts des mobilen Endgeräts. Wünschenswert wäre es, Zeiten, in denen das mobile Endgerät auf Grund des Sicherns von Daten in die Teilnehmerkarte nicht auf Eingaben des Nutzers reagiert, möglichst gering zu halten oder ganz zu beseitigen.

Gemäß einer weiteren Variante der Erfindung wird das Sichern der Daten derart im Hintergrund durchgeführt, dass eine Eingabe eines Nutzers an einer Eingabeeinrichtung, z.B. Tastatur, Mikrofon etc., des mobilen Endgeräts eine höhere Priorität hat als das Sichern der Daten, wobei bedarfsweise das Sichern der Daten während der Eingabe des Nutzers unterbrochen wird und später wieder fortgesetzt wird.

Bei der Variante des Sicherns im Hintergrund hat stets die Eingabe des Nutzers höhere Priorität als das Sichern von Daten in die Teilnehmerkarte. Zeiten, in denen das mobile Endgerät auf Grund des Sicherns von Daten in die Teilnehmerkarte nicht auf Eingaben des Nutzers reagiert, sind möglichst gering gehalten oder sogar ganz beseitigt. Das Sichern von Daten wird z.B. in Zeitabschnitten fortgesetzt, in denen der Nutzer keine Eingaben macht.

In dem erfindungsgemäßen mobilen Endgerät, das mit einer Teilnehmerkarte in einem Mobilfunksystem betreibbar ist, ist eine Sicherungs-Applikation implementiert, die zum Sichern von Daten des mobilen Endgeräts in die Teilnehmerkarte eingerichtet ist.

In der erfindungsgemäßen Teilnehmerkarte zum Betreiben eines mobilen Endgeräts in einem Mobilfunksystem ist eine Lade-Applikation implementiert, mit der eine Sicherungs-Applikation in ein mobiles Endgerät ladbar ist, die zum Sichern von Daten des mobilen Endgeräts in die Teilnehmerkarte eingerichtet ist.

Wahlweise wird die Sicherungs-Applikation anlässlich eines ersten Betreibens der Teilnehmerkarte im mobilen Endgerät aus der Teilnehmerkarte in das mobile Endgerät implementiert. Wahlweise werden beim Laden der Sicherungs-Applikation in das Endgerät im mobilen Endgerät geeignete Datenstrukturen angelegt, so dass, bei nachfolgenden erneuten Betrieben des Endgeräts mit der Teilnehmerkarte, die Sicherungs-Applikation im Endgerät unabhängig von der Lade-Applikation Daten in die Teilnehmerkarte sichern kann.

Um das Sichern der Daten, auch unabhängig von den tatsächlichen Eigenschaften des Betriebssystems des Endgerätes, ohne Beeinflussung des Nutzers durchführen zu können, sind weitere Ausgestaltungen denkbar. Das Sichern der Daten kann in Teilschritten erfolgen, zwischen denen eine weitere Wartezeit eingehalten wird. Das Sichern der Daten kann gestartet werden, wenn erkannt wird, dass der Benutzer nicht mit dem Endgerät interagiert. Das Sichern der Daten kann unterbrochen werden, wenn erkannt wird, dass der Benutzer mit dem Endgerät interagiert.

Im Folgenden wird die Erfindung an Hand von Ausführungsbeispielen und unter Bezugnahme auf die Zeichnung näher erläutert, in der zeigen:
- Fig.1: ein mobiles Endgerät und eine Teilnehmerkarte, zur Veranschaulichung des erfindungsgemäßen Verfahrens;
- Fig. 2: eine schematische Liste von Referenzen, für ein Verfahren gemäß einer Variante der Erfindung.

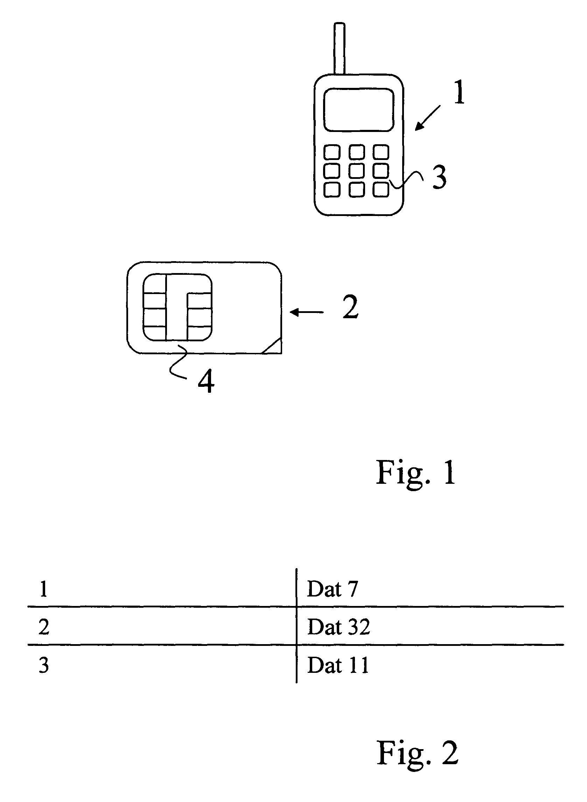

Fig.1 zeigt ein mobiles Endgerät 1 und eine Teilnehmerkarte 2, zur beispielhaften Veranschaulichung des erfindungsgemäßen Verfahrens. Im mobilen Endgerät 2, genauer in einer elektronischen Schaltung des Endgeräts 1, ist eine Sicherungs-Applikation 3 implementiert, um Daten aus dem Endgerät 2 in die Teilnehmerkarte 2 zu sichern. Die Sicherungs-Applikation 3 wurde zuvor mit einer in der Teilnehmerkarte 2, genauer in einer elektronischen Schaltung der Teilnehmerkarte 2, implementierten Lade-Applikation 4 aus der Teilnehmerkarte 2 in das Endgerät 3 geladen.

Bei einer bevorzugten Ausführungsform der Erfindung erlaubt das Endgerät 1 einen Multitasking-Betrieb, bei dem mehrere Tasks abwechselnd die Ressourcen (z.B. Mikroprozessor, Speicher) des Endgeräts 1 nutzen. Ein erster Task ist durch die Sicherungs-Applikation 3 besetzt. Ein zweiter Task ist durch Eingaben eines Nutzers des Endgeräts 3 auf der Tastatur des Endgeräts 1 besetzt. Der erste Task (Sicherungs-Applikation 3) hat eine geringere Priorität als der zweite Task (Eingaben des Nutzers über die Tastatur). Hierdurch wird die Sicherungs-Applikation 3 jedes Mal unterbrochen, wenn der Nutzer eine Eingabe auf der Tastatur des Endgeräts 1 tätigt. Die Bedienbarkeit des Endgeräts 1 wird somit durch die Sicherungs-Applikation 3 nicht beeinträchtigt, sondern die Sicherungs-Applikation 3 läuft im Hintergrund ab und nutzt zum Sichern von Daten Zeitfenster, in denen der Nutzer keine Eingaben am Endgerät 1 tätigt. Ein derartiger Multitasking-Betrieb ist beispielsweise, aber nicht nur, bei Endgeräten möglich, die unter dem Betriebssystem Windows CE laufen.

Im Folgenden werden Ausführungsvarianten beschrieben, die auch unabhängig von der Ausgestaltung des Betriebssystems des Endgerätes als MultiTasking-Betriebssystem das Sichern so gestalten können, dass der Benutzer das Endgerät normal weiter verwenden kann. Vorzugsweise wird die Sicherungsapplikation 3 angepasst, um das Sichern jeweils entsprechend zu steuern.

Es ist möglich, nach jeweils einem vorbestimmten weiteren Zeitraum einen Datensatz zu sichern (Beispiel: 1 Datensatz sichern, dann wieder eine Sekunde warten,1 Datensatz sichern,1s warten, ...). Hierdurch hält sich die Verzögerung für den Benutzer in Grenzen, insbesondere falls er während des Sicherns eine Aktion vornimmt. Dieses Verfahren kann mit der bisher beschriebenen (Anfangs-)Wartezeit kombiniert werden. Man kann eine feste oder variable Anfangswartezeit abwarten, danach 1 Datensatz sichern, dann 1s warten, 1 Datensatz sichern,1s warten usw..

Eine weitere Lösung ist es, abzuwarten, bis der Benutzer vermutlich inaktiv ist und dann mit der Datensicherung zu beginnen. Hinweise auf eine Nutzerinaktivität (Nutzerinteraktion) können folgende "Ereignisse" sein: die Hintergrundbeleuchtung schaltet sich aus, der Bildschirmschoner schaltet sich ein oder die CPU-Last für Nutzerprozesse liegt für einen bestimmten Zeitraum unter einem bestimmten Wert. Falls der Nutzer inaktiv ist, kann mit der Datensicherung begonnen werden.

Insbesondere während einer nicht unterbrochenen Datensicherung, wie sie bereits beschrieben wurde, kann das Endgerät bzw. bevorzugt die Sicherungsapplikation darauf achten, ob eine Nutzeraktion ansteht und die Datensicherung unterbrechen. Eine Nutzerinteraktion kann beispielsweise anhand von folgenden Ereignissen erkannt werden: die Hintergrundbeleuchtung wird wieder eingeschaltet, der Bildschirmschoner wird deaktiviert, ein Nutzerprozess wird vom Betriebssystem aus dem Idle-Modus "aufgeweckt".

Als Wartezeit oder weitere Wartezeit im vorliegenden Sinne werden insbesondere Zeiten verstanden, die größer sind als gegebenenfalls durch Kommunikationsprotokolle vorgegebene Kommunikationswartezeiten.

Fig. 2 zeigt eine schematische Liste von in einem Endgerät angelegten Referenzen. Im Endgerät wurden nacheinander, in dieser zeitlichen Reihenfolge, die Datensätze 7, 32 und 11 geändert. Entsprechend wurde die in Fig. 2 dargestellte Liste von Referenzen im Endgerät angelegt, um zu markieren, dass die Datensätze 7, 32 und 11 in die Teilnehmerkarte des Endgeräts gesichert werden müssen bzw. in der Teilnehmerkarte aktualisiert werden müssen.

## Patentansprüche

1. Verfahren zum Sichern von Daten eines mobilen Endgeräts (1), das mit einer Teilnehmerkarte ((U)SIM, 2) in einem Mobilfunksystem betreibbar ist, **dadurch gekennzeichnet, dass** die Daten automatisch in die Teilnehmerkarte ((U)SIM, 2) gesichert werden, nachdem die Daten im mobilen Endgerät (1) geändert worden sind, und dass vor dem Sichern von Daten, nachdem die Daten im mobilen Endgerät (1) geändert worden sind, eine Wartezeit eingehalten wird, innerhalb der kein Sichern von Daten durchgeführt wird.

2. Verfahren nach Anspruch 1, wobei die Daten Kontaktdaten eines Telefonbuchs des mobilen Endgeräts (1) umfassen.

3. Verfahren nach Anspruch 1 oder 2, wobei die Daten Konfigurationsdaten des mobilen Endgeräts (1) umfassen.

4. Verfahren nach einem der Ansprüche 1 bis 3, wobei die Daten eine Mehrzahl von Datensätzen aufweisen, und wobei zu jedem Datensatz, der im mobilen Endgerät (1) geändert wird, im mobilen Endgerät (1) eine Referenz angelegt wird, aus der erkennbar ist, dass der Datensatz oder ein Teil-Datensatz davon in die Teilnehmerkarte ((U)SIM, 2) gesichert werden muss, wobei die Referenz wieder aus dem mobilen Endgerät (1) gelöscht wird, sobald der Datensatz bzw. der Teil-Datensatz in die Teilnehmerkarte ((U)SIM, 2) gesichert ist.

5. Verfahren nach Anspruch 4, wobei alle oder ein Teil der angelegten Referenzen oder der den angelegten Referenzen zugeordneten Vorgänge des Sicherns von Datensätzen gemäß vorbestimmten oder vorbestimmbaren Kriterien sortiert und/oder zusammengefasst werden.

6. Verfahren nach Anspruch 4 oder 5 in Verbindung mit Anspruch 5, wobei die Wartezeit umso länger ist, je mehr Referenzen im mobilen Endgerät (1) angelegt sind.

7. Verfahren nach einem der Ansprüche 1 bis 6, wobei das Sichern der Daten derart im Hintergrund durchgeführt wird, dass eine Eingabe eines Nutzers an einer Eingabeeinrichtung des mobilen Endgeräts (1) eine höhere Priorität hat als das Sichern der Daten, wobei bedarfsweise das Sichern der Daten während der Eingabe des Nutzers unterbrochen wird und später wieder fortgesetzt wird.

8. Verfahren nach einem der Ansprüche 1 bis 7, wobei die Daten in mehreren Teilschritten, eines Sicherns eines Teils der Daten, gesichert werden und vor jedem Teilschritt des Sicherns eine weitere Wartezeit eingehalten wird, in der keine Daten gesichert werden.

9. Verfahren nach einem der Ansprüche 1 bis 8, wobei die Daten in mehreren Teilschritten, eines Sicherns eines Teils der Daten, gesichert werden und vor jedem Teilschritt des Sicherns eine weitere Wartezeit eingehalten wird, in der keine Daten gesichert werden.

10. Verfahren nach einem der Ansprüche 1 bis 9, wobei erkannt wird, ob eine Nutzerinteraktion vorliegt und das Sichern der Daten unterbrochen wird, wenn erkannt wird, dass eine Nutzerinteraktion vorliegt.

11. Verfahren nach einem der Ansprüche 1 bis 10, wobei erkannt wird, ob eine Nutzerinteraktion vorliegt, und mit dem Sichern der Daten begonnen wird, wenn erkannt wird, dass keine Nutzerinteraktion vorliegt.

12. Mobiles Endgerät (1), das mit einer Teilnehmerkarte ((U)SIM, 2) in einem Mobilfunksystem betreibbar ist, wobei in dem mobilen Endgerät (1) eine Sicherungs-Applikation (3) implementiert ist, die zum Sichern von Daten des mobilen Endgeräts (1) in die Teilnehmerkarte ((U)SIM, 2) nach einem der Ansprüche 1 bis 11 eingerichtet ist.

13. Teilnehmerkarte (2) zum Betreiben eines mobilen Endgeräts (1) in einem Mobilfunksystem, wobei in der Teilnehmerkarte (2) eine Lade-Applikation (4) implementiert ist, mit der eine Sicherungs-Applikation (3) in ein mobiles Endgerät (1) ladbar ist, die zum Sichern von Daten des mobilen Endgeräts (1) in die Teilnehmerkarte ((U)SIM, 2) nach einem der Ansprüche 1 bis 11 eingerichtet ist.
